# EUROPÄISCHE PATENTANMELDUNG

(11) **EP 0 908 222 A1**
(43) Veröffentlichungstag der Anmeldung: **14.04.1999**
(21) Anmeldenummer: 97116106.2
(22) Anmeldetag: 16.09.1997
(51) Int. Cl.: B01D 53/86

(54) **Verfahren zur Niedertemperaturminderung von Dioxinen in einem Abgas einer technischen Anlage**

(71) Anmelder: SIEMENS AKTIENGESELLSCHAFT, 80333 München (DE)
(72) Erfinder: Pajonk, Günther, Dr., 96199 Zapfendorf (DE); Fischer, Stefan, Dr., 96215 Lichtenfels (DE); Witzel, Frank, Dr., 96215 Lichtenfels (DE)

(57) **Zusammenfassung**

Es wird ein Verfahren zur Niedertemperaturminderung von Dioxinen in einem Abgas einer technischen Anlage (1), insbesondere einer Müllverbrennungsanlage oder einer Sinteranlage, angegeben, wobei dem Abgas ein Dioxine adsorbierender Zuschlagstoff (9) zugegeben wird, welcher gleichzeitig für die Oxidation der Dioxine katalytisch aktiv ist. Auf diese Weise läßt sich gegenüber herkömmlichen Verfahren zur Niedertemperaturminderung von Dioxinen die Menge an Zuschlagstoff (9) beträchtlich reduzieren.

## Beschreibung

Die Erfindung bezieht sich auf ein Verfahren zur Niedertemperaturminderung von Dioxinen in einem Abgas einer technischen Anlage, insbesondere einer Mullverbrennungsanlage oder einer Sinteranlage, wobei dem Abgas ein Dioxine adsorbierender Zuschlagstoff zugegeben wird.

Der Begriff "Dioxine" wird dabei als Sammelbegriff für die Gruppe der zyklischen halogenierten aromatischen Polyether verwendet. Hierzu gehören insbesondere die zyklischen Ether (Furane) sowie die zyklischen Diether (die eigentlichen Dioxine). Als besonders toxisch wirkende Vertreter beider Gruppen seien hier die polychlorierten Dibenzodioxine (PCDD) und die polychlorierten Dibenzofurane (PCDF) genannt. Insbesondere können Dioxine durch unvollständige Verbrennung entstehen und/oder durch die sogenannte De-Novo-Synthese bei Vorhandensein von organischen Kohlenstoffverbindungen, Alkali- oder Erdalkalichloriden sowie als Katalysatoren wirkende Metallverbindungen beim Abkühlen im Abgas technischer Anlagen neu gebildet werden.

Ein derartiges Verfahren eignet sich zur Verringerung von Dioxinen im Abgas eines Fossilkraftwerks oder einer Müllverbrennungsanlage, insbesondere auch bei Temperaturen von weniger als 250 °C. Dabei werden die nach Durchfuhrung an sich bekannter Reinigungsverfahren wie saurer Rauchgaswasche, Entstaubung mittels Zyklonen oder Elektrofiltern und katalytischem Abbau von Schadstoffen noch in dem Abgas verbliebenen oder neu gebildeten Dioxine entfernt.

Das Verfahren wird ebenso angewendet, um Dioxine aus dem mit einer Temperatur von maximal 250 °C vorliegenden Abgas einer Sinteranlage Zu entfernen. Eine Sinteranlage ist dabei eine großtechnische Anlage der Hüttentechnik und dient dazu, in feinkörniger oder in feinstaubiger Form vorliegende Metallerze oder Metalle durch Sintern stückig zu machen, um derartige Metalle oder Erze in einem Hochofen verhütten zu können. Da auf diese Weise häufig mit Schmiermitteln oder Bohrhilfsmitteln versetzte Abfälle der metallverarbeitenden Industrie der Verhüttung zuganglich gemacht werden, stellt eine Sinteranlage eine nicht zu unterschätzende Quelle für die Dioxinemission dar.

Zur Durchführung des Verfahrens wird dem Abgas an geeigneter Stelle ein Dioxine adsorbierender Zuschlagstoff zugegeben, welcher die in dem Abgas enthaltenen Dioxine durch Adsorption an sich bindet. Der beladene Zuschlagstoff wird durch einen entsprechend ausgestalteten Filter dem Abgas an geeigneter Stelle wieder entnommen. So ist es aus W. Weiss: "Minderung der PCDD/PCDF-Emissionen an einer Eisenerzsinteranlage", VDI-Berichte Nr. 1298 (1996), Seiten 249 ff bekannt, dem Abgas einer Sinteranlage nach Durchströmen eines Elektrofilters als Zuschlagstoff eine Mischung aus Kalziumhydroxid Ca(OH)₂ und Kohle in Form von Herdofenkoks oder Aktivkohle beizugeben, den mit Dioxinen teilweise befrachteten Zuschlagstoff mittels einer Staubfilterung an einem Gewebefilter dem Abgas wieder zu entnehmen und den Zuschlagstoff dem Abgas erneut zuzuführen. Dabei dient die Kohle selbst als ein Adsorptionsmittel für die Dioxine, wahrend das Kalziumhydroxid die Gefahr der Entzündung der Kohle verringert. Nach Abscheidung des Kalkhydrat/Kohle-Gemisches am Gewebefilter wird im Abgas der Sinteranlage eine Minimierung der Dioxine auf unter den zur Zeit in Deutschland gültigen Richtwert von 0,1 ng TE/m³ (TE = Toxical Equivalent) erreicht.

Des weiteren ist aus G. Mayer-Schwinning et al.: "Minderungstechniken zur Abgasreinigung für PCDD/F", VDI-Berichte Nr. 1298 (1996), Seite 191 ff, bekannt, dem Abgas einer Müllverbrennungsanlage nach konventioneller Abgasreinigung mit Hilfe eines Wirbelschichtreaktors als Dioxine adsorbierenden Zuschlagstoff Zeolithe beizugeben. Die sich im Abgas befindlichen, teilweise mit Dioxinen beladenen Zeolithe werden wiederum mittels eines nachgeschalteten Gewebefilters entnommen und dem Wirbelschichtreaktor zugeführt. Auch ist es bekannt, die Zeolithe zusammen mit Kalziumhydroxid dem Abgas zuzugeben. Hierdurch wird erreicht, daß die Dioxinemission der Mullverbrennungsanlage auf Werte unterhalb des Richtwertes verringert wird.

Durch die Rezirkulation des Zuschlagstoffes wird aufgrund der längeren Verweilzeit im Abgas eine hohe Beladung des Zuschlagstoffes mit Dioxinen erzielt. Nach nur wenigen Zyklen ist jedoch aufgrund der begrenzten Aufnahmekapazität die Adsorptionsfähigkeit des Zuschlagstoffes erschöpft. Der Zuschlagstoff ist verbraucht und muß aus dem Rezirkulationsprozeß entfernt werden. Der mit Dioxinen beladene Zuschlagstoff muß dann nachteiligerweise entweder durch aufwendige Verfahren regeneriert, auf einer Deponie endgelagert oder durch eine thermische Behandlung oder Einbindung in eine Schlacke unschädlich gemacht werden. Gleiches gilt selbstverständlich auch dann, wenn der als Filterstaub abgeschiedene Zuschlagstoff direkt entnommen und nicht rezirkuliert wird. Auch sind sowohl die Zeolithe als auch das bei Verwendung der Kohle als Zuschlagstoff unabdingbare Kalziumhydroxid vergleichsweise teuer, so daß das Einhalten der Emissionswerte für Dioxine einer technischen Anlage mit Hilfe der konventionellen Verfahren mit einem hohen Kostenaufwand verbunden ist.

Aufgabe der Erfindung ist es daher, die in einem Abgas einer technischen Anlage enthaltenen Dioxine im Niedertemperaturbereich gegenüber dem Stand der Technik wesentlich effektiver und kostengünstiger zu mindern.

Zur Lösung der Aufgabe wird hierzu ein Verfahren zur Niedertemperaturminderung von Dioxinen in einem Abgas einer technischen Anlage, insbesondere einer Müllverbrennungsanlage oder einer Sinteranlage, angegeben, wobei dem Abgas ein Dioxine adsorbierender Zuschlagstoff zugegeben wird und wobei erfindungsgemäß der adsorbierende Zuschlagstoff zusätzlich für die Oxidation der Dioxine katalytisch aktiv ist.

Die Erfindung geht dabei von der Überlegung aus, daß aufgrund der dauerhaften Adsorption der Dioxine auf dem Zuschlagstoff auch bei den niedrigen Abgastemperaturen von unterhalb 250 °C eine katalytische Aktivität des Zuschlagstoffs zur Zersetzung der Dioxine ausgenutzt werden kann. Die Adsorption eines zu zersetzenden Stoffes auf einem Katalysator ist nämlich bekanntermaßen eine der Grundvoraussetzungen für den katalytischen Stoffabbau.

Die auf dem Zuschlagstoff adsorbierten Dioxine werden bereits während der Verweilzeit des Zuschlagstoffes im Abgas durch dessen katalytische Aktivität zu einfachen Verbindungen wie beispielsweise Halogenwasserstoff, Kohlendioxid und Wasser abgebaut. Hierbei kann sowohl das Abgas selbst oder noch in dem Abgas vorhandene sauerstoffhaltige organische Verbindungen als Sauerstoffspender dienen. Die Abbauprodukte desorbieren vom Zuschlagstoff, so daß dieser wieder zur Adsorption von Dioxinen zur Verfügung steht. Die Lebensdauer eines derartigen Zuschlagstoffes ist damit nicht durch die Befrachtung mit Dioxinen sondern nur durch die Beladung mit sonstigen im Abgas enthaltenen Fremdstoffe limitiert.

Gegenüber einem Zuschlagstoff, der lediglich Dioxine adsorbiert, weist daher ein Zuschlagstoff, der gleichzeitig katalytisch aktiv ist, eine wesentlich längere Lebensdauer auf und kann infolgedessen in einem Rezirkulationsprozeß wesentlich öfter dem Abgas wieder zugeführt werden.

Die Erfindung bietet daher den Vorteil, daß sich eine effektive Minderung der Dioxine im Niedertemperaturbereich mit einer wesentlich geringeren Menge des Zuschlagstoffes erreichen läßt, als dies bei den bekannten Verfahren der Fall ist. Auf diese Weise können die anfallenden Kosten beträchtlich verringert werden. Durch die längere Lebensdauer des katalytisch aktiven Zuschlagstoffes wird zudem die zu entsorgende Menge des unbrauchbar gewordenen Zuschlagstoffes verringert, so daß auch weniger Entsorgungskosten anfallen.

Der Zuschlagstoff selbst kann durch eine entsprechende Dosiereinrichtung einfach in das Abgas eingebracht und durch Staubabscheidung an einem geeigneten Filter, beispielsweise einem Gewebefilter oder einem Elektrofilter, dem Abgas wieder entnommen werden. Ebenso ist es auch vorstellbar, daß anstelle der Dosiereinrichtung der katalytisch aktive Zuschlagstoff mittels eines Wirbelschichtreaktors mit dem durchströmenden Abgas verwirbelt und dadurch vermischt wird.

Der katalytisch aktive Zuschlagstoff kann nach einmaligem Durchgang bereits endgültig entnommen oder erneut dem Abgas zurückgeführt werden.

In vorteilhafter Ausgestaltung der Erfindung wird als Zuschlagstoff wenigstens ein Oxid wenigstens eines der Elemente der Gruppe, welche die Übergangsmetalle sowie Aluminium, Zinn und Silizium enthält, in Pulverform mit einer spezifischen Oberfläche von mehr als 30 m²/g zugegeben. Dabei kann insbesondere eine Mischung der Oxide, ein Mischoxid oder ein Kopräzipitat der Oxide zugegeben werden. Aufgrund der vergleichsweise hohen spezifischen Oberfläche weisen derartige Oxide eine hohe Adsorptionsfähigkeit für Dioxine auf. Gleichzeitig wirken derartige Oxide bekanntermaßen als Katalysatoren für die Oxidation der Dioxine. Die hohe spezifische Oberfläche läßt sich dabei durch bekannte Herstellungsverfahren erzielen. Auch sind viele dieser Oxide mit einer derartigen, vergleichsweise hohen spezifischen Oberfläche bereits im Handel käuflich zu erwerben. Die Adsorptionsfähigkeit der Oxide wird weiter verbessert, wenn die spezifische Oberfläche mehr als 100 m²/g beträgt.

Eine besonders hohe katalytische Aktivität und Adsorptionsfähigkeit weist ein pulverförmiger Zuschlagstoff aus Titandioxid der Anatas-Modifikation mit einer spezifischen Oberfläche von mehr als 100 m²/g auf. Die hohe katalytische Aktivität des Titandioxids zum Abbau von Dioxinen wird beispielsweise bereits in herkömmlichen Katalysatoren ausgenutzt. Günstig für die katalytische Aktivität wirken darüber hinaus Mischoxide auf der Basis von Titan, Wolfram, Molybdän und Vanadium.

In einer weiteren vorteilhaften Ausgestaltung der Erfindung wird als Zuschlagstoff ein Zeolith beigegeben, welcher mit wenigstens einem Metall aus der Gruppe der Übergangsmetalle dotiert ist. Die Dotierung geschieht dabei über ein redoxaktives Metallion. Ein derartiger Zeolith, d.h. ein kristallines Gerüstaluminosilikat mit charakteristischen Mikroporen, weist eine besonders hohe Adsorptionsfähigkeit unter anderem für Dioxine auf. Ein derartiger Zeolith kann sowohl ein natürlicher Zeolith wie beispielsweise Mordenit sein, oder ein synthetischer Zeolith, wie ein durch Dealuminierung eines Y-Zeoliths hergestellter DAY-Zeolith. Unter einem Y-Zeolith wird dabei ein Zeolith verstanden, wobei ein Porensystem in Form eines Käfigs ausgebildet ist. Durch die Dotierung des Zeoliths mit einem Metall der Übergangsmetalle wird ein hochreaktive Adsorptionszentrum für Dioxine geschaffen.

In weiterer vorteilhafter Ausgestaltung der Erfindung wird der Zuschlagstoff in Form einer Suspension beigegeben. Die Suspension, d.h. eine Aufschlämmung des Zuschlagstoffes oder der genannten Oxide in einem geeigneten Lösungsmittel, vorzugsweise Wasser, wird dabei durch eine entsprechend ausgestaltete Düse in das vergleichsweise heiße Abgas eingedüst, wobei das Lösungsmittel verdampft. Nach der Verdampfung des Lösungsmittels verbleibt der Zuschlagstoff fein verteilt in staubförmiger Form mit einer hohen spezifischen Oberfläche in dem Abgas.

Für die Dioxinminderung im Niedertemperaturbereich ist es weiterhin vorteilhaft, dem Abgas zusätzlich zum Zuschlagstoff Kohle beizugeben. Die Kohle kann dabei in Form von Herdofenkoks oder in Form von Aktivkohle vorliegen. Die Kohle dient dabei zusätzlich als ein Adsorptionsmittel für die im Abgas enthaltenen Dioxine. Dabei verringern die genannten katalytisch aktiven Zuschlagstoffe die Gefahr einer Selbstentzündung der Kohle nach Zufuhr derselbigen in das Abgas.

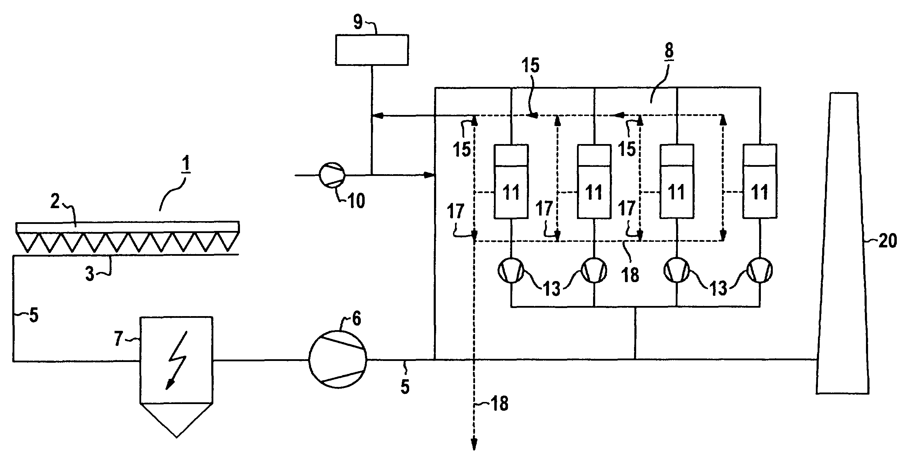

Ein Ausführungsbeispiel der Erfindung wird anhand einer Zeichnung näher erläutert. Dabei zeigt die Zeichnung schematisch eine Niedertemperaturminderung der Dioxine im Abgas einer Sinteranlage.

In der Zeichnung ist eine Sinteranlage 1 mit einem Sinterband 2 und einer Abgasabsaugung 3 dargestellt. Das in der Abgasabsaugung 3 gesammelte Abgas der Sinteranlage 1 wird in eine Abgasleitung 5 geleitet. Hierzu erzeugt ein Sauggebläse 6 den erforderlichen Unterdruck. Zur Staubabscheidung aus dem Abgas ist hierbei ein Elektrofilter 7 in der Abgasleitung 5 angeordnet.

Im Anschluß an den Elektrofilter 7 ist in einem Bypass der Abzugsleitung 5 eine Filteranlage 8 angeordnet. Dabei wird dem der Filteranlage 8 zuströmenden Abgas als Zuschlagstoff 9 eine Mischung aus Aktivkohle und pulverförmigem Titandioxid der Anatas-Modifikation mit einer vergleichsweise hohen spezifischen Oberfläche von 100 m²/g zugegeben. Die Zugabe des Zuschlagstoffs 9 erfolgt dabei pneumatisch mittels eines Verdichters 10. Das mit dem Zuschlagstoff 9 befrachtete Abgas durchströmt anschließend die Filteranlage 8, welche eine Anzahl von parallel angeordnete Gewebefiltern 11 mit daran angeschlossenen Sauggebläsen 13 umfaßt. In diesen Gewebefiltern 11, welche aus eine Reihe von Filterschläuchen bestehen, wird der Zuschlagstoff 9 als Filterstaub abgeschieden. Der Filterstaub wird dann teilweise - angedeutet durch den Pfeil 15 - wieder dem Abgasstrom zugeführt und teilweise - angedeutet durch den Pfeil 17 - dem Reinigungsprozeß mittels einer Filterstaubentnahme 18 entzogen. Die Entnahme des Zuschlagstoffes 9 mittels der Filterstaubentnahme 18 geschieht dabei entweder kontinuierlich oder im off-line-Betrieb der Filteranlage 8. Das die Filteranlage 8 verlassende Reingas wird schließlich über einen Kamin 20 in die Umgebung geleitet.

## Patentansprüche

1. Verfahren zur Niedertemperaturminderung von Dioxinen in einem Abgas einer technischen Anlage (1), insbesondere einer Müllverbrennungsanlage oder einer Sinteranlage, wobei dem Abgas ein Dioxine adsorbierender Zuschlagstoff (9) zugegeben wird,
**dadurch gekennzeichnet,** daß der Zuschlagstoff (9) zusätzlich für die Oxidation der Dioxine katalytisch aktiv ist.

2. Verfahren nach Anspruch 1,
**dadurch gekennzeichnet,** daß als Zuschlagstoff (9) wenigstens ein Oxid wenigstens eines Elements der Gruppe, welche die Übergangsmetalle sowie Aluminium, Zinn und Silizium enthält, in Pulverform mit einer spezifischen Oberfläche von mehr als 30 m²/g, vorzugsweise von mehr als 100 m²/g, zugegeben wird.

3. Verfahren nach Anspruch 2,
**dadurch gekennzeichnet,** daß als Zuschlagstoff (9) ein pulverförmiges Titandioxid der Anatas-Modifikation mit einer spezifischen Oberfläche von mehr als 100 m²/g zugegeben wird.

4. Verfahren nach Anspruch 3,
**dadurch gekennzeichnet,** daß der Zuschlagstoff (9) außer dem Titandioxid weitere oxidische Komponenten von Wolfram, Molybdän und/oder Vanadium umfaßt.

5. Verfahren nach Anspruch 1,
**dadurch gekennzeichnet,** daß als Zuschlagstoff (9) ein Zeolith beigegeben wird, welcher mit wenigstens einem Metall aus der Gruppe der Übergangsmetalle dotiert ist.

6. Verfahren nach einem der Ansprüche 1 bis 5,
**dadurch gekennzeichnet,** daß der Zuschlagstoff (9) in Form einer Suspension beigegeben wird.

7. Verfahren nach einem der Ansprüche 1 bis 6,
**dadurch gekennzeichnet,** daß dem Abgas zusätzlich zum Zuschlagstoff (9) Kohle beigegeben wird.
